(19) Europäisches Patentamt
European Patent Office
Office européen des brevets

(11)  **EP 4 474 423 A1**

(12)  **EUROPEAN PATENT APPLICATION**
published in accordance with Art. 153(4) EPC

(43) Date of publication:
**11.12.2024 Bulletin 2024/50**

(21) Application number: **23749820.9**

(22) Date of filing: **02.02.2023**

(51) International Patent Classification (IPC):
***C08L 25/04*** (2006.01)      ***C08L 67/02*** (2006.01)

(52) Cooperative Patent Classification (CPC):
**C08L 25/04; C08L 67/02;** Y02W 30/62

(86) International application number:
**PCT/JP2023/003392**

(87) International publication number:
**WO 2023/149504 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.02.2022 JP 2022016434**

(71) Applicant: **Mitsubishi Chemical Corporation
Tokyo 100-8251 (JP)**

(72) Inventor: **SUZUKI Takayuki
Hiratsuka-shi, Kanagawa 254-0016 (JP)**

(74) Representative: **Hoffmann Eitle
Patent- und Rechtsanwälte PartmbB
Arabellastraße 30
81925 München (DE)**

(54)  **RESIN COMPOSITION AND SHAPED ARTICLE**

(57)    To provide a resin composition that generates less gas during heat treatment and has high weld strength, and a molded body formed from the resin composition. A resin composition comprising: a polybutylene terephthalate resin; and a polystyrene-based resin having a weight average molecular weight (Mw) of $2.00 \times 10^5$ or more and a molecular weight distribution (Mw/Mn) of 3.20 or more, wherein the polystyrene-based resin contains elemental iron in a proportion of from 0.1 to 160.0 ppm by mass with respect to 100 parts by mass of the polystyrene-based resin.

**EP 4 474 423 A1**

**Description**

[Technical Field]

The present invention relates to a resin composition and a molded body.

[Background Art]

Polybutylene terephthalate resins have excellent mechanical performance, electrical properties, processing properties, and the like, and are widely used for various purposes.

A polystyrene-based resin may be added in order to impart various functions to a polybutylene terephthalate resin. Further, when using a resin composition including such a polybutylene terephthalate resin for various purposes, injection molding is widely practiced (Patent Literature 1 and Patent Literature 2).

[Citation List]

[Patent Literature]

[Patent Literature 1]
Japanese Patent Laid-Open No. 2021-161335A
[Patent Literature 2]
International Publication No. WO 2018/143100

[Summary of the Invention]

[Object of the Invention]

Here, when the resin composition is injection molded, a weld line is formed in the molded body obtained. If the strength of this weld line is weak, this weakness will cause the overall molded body to have insufficient strength. Further, it has been found that attempts to solve the problem relating to weld strength may increase the amount of gas generated during heat treatment.

It is an object of the present invention to solve this problem, and the present invention provides a resin composition that generates less gas during heat treatment and has high weld strength, and a molded body formed from the resin composition.

[Solution to Problem]

The present inventors conducted research to address the above-mentioned problems, and as a result, the problems described above are solved by adding a polystyrene-based resin that has a large weight average molecular weight and a large molecular weight distribution to a polybutylene terephthalate resin containing a certain amount of elemental iron.

Specifically, the problems described above are solved by the following means.

<1> A resin composition comprising:

a polybutylene terephthalate resin; and
a polystyrene-based resin having a weight average molecular weight (Mw) of $2.00 \times 10^5$ or more and a molecular weight distribution (Mw/Mn) of 3.20 or more, wherein
the polystyrene-based resin contains elemental iron in a proportion of from 0.1 to 160.0 ppm by mass with respect to 100 parts by mass of the polystyrene-based resin.

<2> The resin composition according to <1>, wherein a total amount of elemental iron and elemental zinc contained in the polystyrene-based resin is from 1 to 280 ppm by mass with respect to 100 parts by mass of the polystyrene-based resin.

<3> The resin composition according to <1> or <2>, wherein the polystyrene-based resin contains elemental zinc in a proportion of from 0.1 to 1000.0 ppm by mass with respect to 100 parts by mass of the polystyrene-based resin.

<4> The resin composition according to any one of <1> to <3>, wherein the polystyrene-based resin contains ash in a proportion of from 0.001 to 10% by mass.

<5> The resin composition according to any one of <1> to <4>, wherein the polystyrene-based resin contains elemental calcium in a proportion of from 0.1 to 1000.0 ppm by mass with respect to 100 parts by mass of the polystyrene-based resin.

<6> The resin composition according to any one of <1> to <5>, wherein the polystyrene-based resin contains a polystyrene resin and/or a rubber-reinforced polystyrene resin.

<7> The resin composition according to any one of <1> to <6>, wherein

the polybutylene terephthalate resin has an intrinsic viscosity (IV) of from 0.30 to 0.80 dL/g, and
the polystyrene-based resin has a melt viscosity ($\eta$) at 250°C and a shear rate of 912 sec$^{-1}$ of 80 Pa·sec or more.

<8> The resin composition according to any one of <1> to <7>, wherein the polystyrene-based resin contains a recycled product.

<9> The resin composition according to any one of <1> to <8>, wherein the polystyrene-based resin contains a polystyrene resin other than syndiotactic polystyrene and/or a rubber-reinforced polystyrene resin.

<10> The resin composition according to any one of <1> to <9>, wherein the polystyrene-based resin has a content of from 10 to 250 parts by mass with respect to 100 parts by mass of the polybutylene terephthalate resin.

<11> The resin composition according to any one of <1> to <10>, wherein

a total amount of elemental iron and elemental zinc contained in the polystyrene-based resin is from 1 to 280 ppm by mass with respect to 100 parts by mass of the polystyrene-based resin,
the polystyrene-based resin contains elemental zinc in a proportion of from 0.1 to 1000.0 ppm by mass with respect to 100 parts by mass of the polystyrene-based resin,
the polystyrene-based resin contains ash in a proportion of from 0.001 to 10% by mass,
the polystyrene-based resin contains elemental calcium in a proportion of from 0.1 to 1000.0 ppm by mass with respect to 100 parts by mass of the polystyrene-based resin,
the polybutylene terephthalate resin has an intrinsic viscosity (IV) of from 0.30 to 0.80 dL/g,
the polystyrene-based resin has a melt viscosity ($\eta$) at 250°C and a shear rate of 912 sec$^{-1}$ of 80 Pa·sec or more,
the polystyrene-based resin contains a recycled product,
the polystyrene-based resin contains a polystyrene resin other than syndiotactic polystyrene and/or a rubber-reinforced polystyrene resin, and
the polystyrene-based resin has a content of from 10 to 250 parts by mass with respect to 100 parts by mass of the polybutylene terephthalate resin.

<12> The resin composition according to any one of <1> to <11>, which is used for laser marking.
<13> A pellet of the resin composition of any one of <1> to <12>.
<14> A molded body formed from the resin composition of any one of <1> to <12>.
<15> A molded body formed from the pellet of <13>.
<16> The molded body according to <14> or <15>, which is for laser marking.

[Advantageous Effects of Invention]

According to the present invention, it is possible to provide a resin composition that generates less gas during heat treatment and has high weld strength, and a molded body formed from the resin composition.

[Description of Embodiments]

A mode for carrying out the present invention (hereinafter, simply referred to as "this embodiment") will now be described in detail. It is noted that this embodiment is an illustrative example for describing the present invention, and the present invention is not limited to only this embodiment.

In addition, in this specification, the meaning of "from ... to ..." includes the numerical values described before and after "..." as a lower limit value and an upper limit value.

In this specification, various physical property values and characteristic values are assumed to be values as of 23°C, unless otherwise stated.

If the measurement methods and the like described in the standards shown in this specification differ from year to year, unless otherwise stated, those measurement standards shall be based on the standards as of January 1, 2022.

The resin composition of this embodiment is characterized by including a polybutylene terephthalate resin, and a polystyrene-based resin having a weight average molecular weight (Mw) of $2.00 \times 10^5$ or more and a molecular weight distribution (Mw/Mn) of 3.20 or more, wherein the polystyrene-based resin contains elemental iron in a proportion of from 0.1 to 160.0 ppm by mass with respect to 100 parts by mass of the polystyrene-based resin.

With such a configuration, a resin composition that generates less gas during heat treatment and has high weld strength can be obtained.

It is inferred that by increasing the molecular weight distribution, the ratio of high molecular weight substances increases, and the higher the molecular weight, the greater the entanglement between molecular chains, resulting in higher weld strength.

On the other hand, it was found that when the amount of elemental iron in the resin composition is increased, the amount of generated gas increases during heat treatment. One possible reason for this is that the elemental iron acts as a catalyst, and promotes the decomposition of components in the resin composition. In this embodiment of the resin composition, it is inferred that it was possible to suppress the promotion of decomposition of the components in the resin composition and reduce the amount of gas generated during heat treatment by precisely adjusting the content of elemental iron.

It is noted that Mn means number average molecular weight.

<Polybutylene terephthalate resin>

The resin composition of this embodiment includes a polybutylene terephthalate resin.

Polybutylene terephthalate resin used in the resin composition of this embodiment is a polyester resin having a structure in which a terephthalic acid unit and a 1,4-butanediol unit are joined by an ester bond. Examples of the resin composition include, in addition to a polybutylene terephthalate resin (homopolymer), polybutylene terephthalate copolymers containing a copolymer component other than the terephthalic acid unit and the 1,4-butanediol unit, and mixtures of homopolymers and polybutylene terephthalate copolymers.

The polybutylene terephthalate resin may contain one or more dicarboxylic acid units other than terephthalic acid.

Specific examples of other dicarboxylic acids include aromatic dicarboxylic acids such as isophthalic acid, orthophthalic acid, 1,5-naphthalene dicarboxylic acid, 2,5-naphthalene dicarboxylic acid, 2,6-naphthalene dicarboxylic acid, biphenyl-2,2'-dicarboxylic acid, biphenyl-3,3'-dicarboxylic acid, biphenyl-4,4'-dicarboxylic acid, bis(4,4'-carboxyphenyl)methane, anthracene dicarboxylic acid, and 4,4'-diphenyl ether dicarboxylic acid, alicyclic dicarboxylic acids such as 1,4-cyclohexanedicarboxylic acid and 4,4'-dicyclohexyldicarboxylic acid, aliphatic dicarboxylic acids such as adipic acid, sebacic acid, azelaic acid, and dimer acid, and the like.

In the polybutylene terephthalate resin used in this embodiment, the terephthalic acid unit preferably accounts for, of all the dicarboxylic acid units, 80 mol% or more, more preferably 90 mol% or more, and further preferably 95 mol% or more, and may be 99 mol% or more.

The diol unit may contain one or more other diol units in addition to 1,4-butanediol.

Specific examples of other diol units include aliphatic or alicyclic diols having from 2 to 20 carbon atoms, bisphenol derivatives, and the like. Specific examples include ethylene glycol, propylene glycol, 1,5-pentanediol, 1,6-hexanediol, neopentyl glycol, decamethylene glycol, cyclohexanedimethanol, 4,4'-dicyclohexylhydroxymethane, 4,4'-dicyclohexylhydroxypropane, ethylene oxide-added diol of bisphenol A, and the like. Further, in addition to the above-described bifunctional monomers, a small amount of a trifunctional monomer such as trimellitic acid, trimesic acid, pyromellitic acid, pentaerythritol, and trimethylolpropane can be used in combination to introduce a branched structure, and a small amount of a monofunctional compound such as a fatty acid can be used in combination to adjust the molecular weight.

In the polybutylene terephthalate resin used in this embodiment, the 1,4-butanediol unit preferably accounts for, of all the diol units, 80 mol% or more, more preferably 90 mol% or more, and further preferably 95 mol% or more, and may be 99 mol% or more.

As described above, the polybutylene terephthalate resin is preferably a polybutylene terephthalate homopolymer obtained by polycondensing a terephthalic acid and 1,4-butanediol. Further, the polybutylene terephthalate resin may be a polybutylene terephthalate copolymer containing one or more dicarboxylic acids other than the terephthalic acid as a carboxylic acid unit and/or one or more diols other than the 1,4-butanediol as a diol unit. When the polybutylene terephthalate resin is a polybutylene terephthalate resin modified by copolymerization, specific examples of preferred copolymers include a polyester ether resin copolymerized with a polyalkylene glycol, in particular polytetramethylene glycol, a dimer acid copolymerized polybutylene terephthalate resin, and an isophthalic acid copolymerized polybutylene terephthalate resin. Among these, it is preferred to use a polyester ether resin copolymerized with polytetramethylene glycol.

In addition, when the polybutylene terephthalate resin is a copolymer, this refers to the polybutylene terephthalate resin wherein an amount of copolymerization is 1 mol% or more and less than 50 mol% of the total units of the polybutylene terephthalate resin. Within that, the amount of copolymerization is preferably 2 mol% or more and less than 50 mol%, more preferably from 3 to 40 mol%, and further preferably from 5 to 20 mol%. Such a copolymerization proportion is preferred because a molded body having low molding shrinkage and high impact resistance can be obtained.

The terminal carboxyl group content of the polybutylene terephthalate resin may be appropriately selected and determined, but the terminal carboxyl group content is usually 60 eq/ton or less, preferably 50 eq/ton or less, and more preferably 30 eq/ton or less. By setting the terminal carboxyl group content to be equal to or less than above upper limit, alkali resistance and hydrolysis resistance tend to improve. Although the lower limit of the terminal carboxyl group content is not particularly limited, the lower limit is preferably 5 eq/ton or more in consideration of the productivity of producing the polybutylene terephthalate resin.

The terminal carboxyl group content of the polybutylene terephthalate resin is a value measured by dissolving 0.5 g of the polybutylene terephthalate resin in 25 mL of benzyl alcohol, and titrating the resultant solution using a 0.01 mol/L solution of sodium hydroxide in benzyl alcohol. The terminal carboxyl group content can be adjusted by any conventionally known method, such as a method of adjusting polymerization conditions such as raw material charge ratio, and polymerization temperature, and pressure reduction method during polymerization, and a method of reacting with a terminal blocking agent.

The intrinsic viscosity of the polybutylene terephthalate resin is preferably 0.30 dL/g or more, more preferably 0.40 dL/g or more, and further preferably 0.60 dL/g or more. Further, the intrinsic viscosity is preferably 2.00 dL/g or less, more preferably 1.50 dL/g or less, further preferably 1.00 dL/g or less, still further preferably 0.80 dL/g or less, and still further preferably 0.75 dL/g or less. By setting the intrinsic viscosity to be equal to or more than the lower limit value, the mechanical strength of the obtained resin composition tends to be further improved. Further, by setting the intrinsic viscosity to be equal to or less than the upper limit value, the fluidity of the resin composition tends to be further improved, and moldability tends to be improved. In particular, by setting the upper limit value to 0.80 dL/g or less, a low-molecular-weight polyalkylene terephthalate resin becomes the sea in a sea-island structure (matrix) or the sea in a co-continuous structure, and a high-melt-viscosity styrene-based resin becomes the islands, and thus heat resistance tends to be high, warpage tends to be low, and appearance tends to be excellent. The details of the high-melt-viscosity styrene-based resin will be described later, but the high-melt-viscosity styrene-based resin is a styrene-based resin having a melt viscosity ($\eta$) at 250°C and a shear rate of 912 sec$^{-1}$ of 80 Pa·sec or more, and is preferably a polystyrene resin and/or rubber-reinforced polystyrene resin having a melt viscosity ($\eta$) at 250°C and a shear rate of 912 sec$^{-1}$ of 80 Pa·sec or more.

When the resin composition of this embodiment contains two or more types of polybutylene terephthalate resins, the intrinsic viscosity is the intrinsic viscosity of the mixture.

The intrinsic viscosity is measured in accordance with the following method.

Polyethylene terephthalate resin pellets are dissolved in a mixed solvent of phenol/1,1,2,2-tetrachloroethane (mass ratio 1/1) so that the concentration is 1.00 g/dL by stirring at 110°C for 1 hour. The mixture is then cooled to 30°C. Using a fully automatic solution viscometer, the number of seconds for the sample solution to fall and the number of seconds for only the solvent to fall are measured at 30°C, and the intrinsic viscosity is calculated using the following formula (1).

$$\text{Intrinsic viscosity} = ((1+4K_H\eta_{sp})^{0.5}-1)/(2K_HC) \quad (1)$$

Here, $\eta_{sp}=\eta/\eta_0-1$, wherein $\eta$ is the number of seconds for the sample solution to fall, $\eta_0$ is the number of seconds for only the solvent to fall, C is the sample solution concentration (g/dL), and $K_H$ is Huggins' constant. $K_H$ is set at 0.33.

The polybutylene terephthalate resin is produced by batchwise or continuous melt polymerization of a dicarboxylic acid component having a terephthalic acid as a main component or an ester derivative thereof and a diol component having 1,4-butanediol as a main component. Further, after producing a low molecular weight polybutylene terephthalate resin by melt polymerization, the degree of polymerization (or molecular weight) can be increased to a desired value by further performing solid phase polymerization under a nitrogen stream or under reduced pressure.

The polybutylene terephthalate resin is preferably obtained by a production method in which a dicarboxylic acid component having a terephthalic acid as a main component and a diol component having 1,4-butanediol as a main component are melt-polycondensed in a continuous or batch method.

The catalyst used in carrying out the esterification reaction may be a conventionally known catalyst, and examples thereof include titanium compounds, tin compounds, magnesium compounds, calcium compounds, and the like. Particularly preferred among these are titanium compounds. Specific examples of the titanium compound as the esterification catalyst include titanium alcoholates such as tetramethyl titanate, tetraisopropyl titanate, and tetrabutyl titanate, and titanium phenolates such as tetraphenyl titanate.

The content of the polybutylene terephthalate resin in the resin composition of this embodiment is, of the resin composition, preferably 5% by mass or more, more preferably 10% by mass or more, further preferably 15% by mass or more, and still further preferably 20% by mass or more. By setting the content to be equal to or more than the above lower limit value, heat resistance, mechanical strength, and chemical resistance tend to be further improved. Further, the content of the polybutylene terephthalate resin in the resin composition is preferably 50% by mass or less, more preferably 45% by mass or less, further preferably 40% by mass or less, still further preferably 35% by mass or less, and still further preferably 30% by mass or less. By setting the content to be equal to or less than the above upper limit value, low-warpage tends to be further improved.

The resin composition of this embodiment may contain only one type of polybutylene terephthalate resin, or may contain two or more types of polybutylene terephthalate resin. When two or more types are included, it is preferable that the total amount falls within the above range.

<Polystyrene-based resin>

The resin composition of this embodiment includes a polystyrene-based resin having a weight average molecular weight (Mw) of $2.00 \times 10^5$ or more and a molecular weight distribution (Mw/Mn) of 3.20 or more. By using a polystyrene-based resin that has a relatively large molecular weight and a relatively large molecular weight distribution, the weld strength of the molded body obtained can be increased.

The weight average molecular weight of the polystyrene-based resin may be $2.20 \times 10^5$ or more, may be $2.30 \times 10^5$ or more, and is preferably $5.00 \times 10^5$ or less, more preferably $4.00 \times 10^5$ or less, further preferably $3.50 \times 10^5$ or less, still further preferably $3.00 \times 10^5$ or less, may be $2.90 \times 10^5$ or less, may be $2.85 \times 10^5$ or less, or $2.80 \times 10^5$ or less. By setting the weight average molecular weight to be equal to or less than the above upper limit value, heat resistance and low-warpage tend to be further improved.

The molecular weight distribution (Mw/Mn) of the polystyrene-based resin may be 3.50 or more, and is preferably 7.00 or less, more preferably 6.00 or less, further preferably 5.00 or less, may be 4.00 or less, and may be 3.50 or less. By setting the molecular weight distribution (Mw/Mn) to be equal to or less than the above upper limit value, the weld strength tends to be further improved.

A polystyrene-based resin that satisfies such a Mw and molecular weight distribution can be obtained by, for example, using recycled polystyrene resin. Further, such a polystyrene-based resin can also be obtained by blending a plurality of types of virgin or recycled polystyrene resins.

The polystyrene-based resin preferably contains ash in a proportion of from 0.001 to 10% by mass. By containing ash, laser marking properties tend to be improved.

The ash content is, with respect to 100% by mass of the polystyrene-based resin, preferably 0.01% by mass or more, more preferably 0.1% by mass or more, further preferably 0.3% by mass or more, and still further preferably 0.4 parts by mass or more. The upper limit value of the ash content is, with respect to 100% by mass of the polystyrene-based resin, preferably 5% by mass or less, more preferably 3% by mass or less, further preferably 1% by mass or less, and still further preferably 0.8% by mass or less.

The polystyrene-based resin used in this embodiment contains elemental iron. Further, the polystyrene-based resin used in this embodiment preferably contains at least one of elemental magnesium, elemental calcium, elemental iron, and elemental zinc. These various elements do not necessarily need to exist as individual elements in the polystyrene-based resin, and may be included as part of a compound. In this embodiment, the measured values in <Measurement of metal element amounts> discussed in the examples described later is taken as the amount of the metal element.

In this embodiment, the polystyrene-based resin contains elemental iron in a proportion of from 0.1 to 160.0 ppm by mass with respect to 100 parts by mass of the polystyrene-based resin. The content of the elemental iron is, with respect to 100 parts by mass of the polystyrene-based resin, more preferably 0.2 ppm by mass or more, further preferably 1.0 ppm by mass or more, still further preferably 10.0 ppm by mass or more, still further preferably 30.0 ppm by mass or more, still further preferably 40.0 ppm by mass or more, and particularly preferably 50.0 ppm by mass or more. By setting the content to be equal to or more than the above lower limit value, laser marking properties tend to be improved. The content of the elemental iron is, with respect to 100 parts by mass of the polystyrene-based resin, more preferably 800.0 ppm by mass or less, further preferably 600.0 ppm by mass or less, still further preferably 400.0 ppm by mass or less, still further preferably 300.0 ppm by mass or less, and still further preferably 200.0 ppm by mass or less. By setting the content to be equal to or less than the above upper limit value, hydrolysis resistance tends to be improved.

The polystyrene-based resin preferably contains elemental magnesium in a proportion of from 0.1 to 1000.0 ppm by mass with respect to 100 parts by mass of the polystyrene-based resin. The content of the elemental magnesium is, with respect to 100 parts by mass of the polystyrene-based resin, more preferably 0.5 ppm by mass or more, further preferably 1.0 ppm by mass or more, still further preferably 50.0 ppm by mass or more, still further preferably 80.0 ppm by mass or more, and still further preferably 100.0 ppm by mass or more. By setting the content to be equal to or more than the above lower limit value, laser marking properties tend to be improved. The content of the elemental magnesium is, with respect to 100 parts by mass of the polystyrene-based resin, more preferably 800.0 ppm by mass or less, further preferably 600.0 ppm by mass or less, still further preferably 400.0 ppm by mass or less, and still further preferably 350.0 ppm by mass or less. By setting the content to be equal to or less than the above upper limit value, hydrolysis resistance tends to be improved.

The polystyrene-based resin preferably contains elemental calcium in a proportion of from 0.1 to 1000.0 ppm by mass with respect to 100 parts by mass of the polystyrene-based resin. The content of the elemental calcium is, with respect to 100 parts by mass of the polystyrene-based resin, more preferably 0.5 ppm by mass or more, further preferably 1.0 ppm by mass or more, still further preferably 10.0 ppm by mass or more, still further preferably 25.0 ppm by mass or more, still further preferably 45.0 ppm by mass or more, and particularly preferably 60.0 ppm by mass or more. By setting the content to be equal to or more than the above lower limit value, laser marking properties tend to be improved. The content of the elemental calcium is, with respect to 100 parts by mass of the polystyrene-based resin, more preferably 800.0 ppm by mass or less, further preferably 600.0 ppm by mass or less, still further preferably 400.0 ppm by mass or less, still further preferably 300.0 ppm by mass or less, still further preferably 200.0 ppm by mass or less, and particularly preferably 150.0 ppm by mass or less. By setting the content to be equal to or less than the above upper limit value, hydrolysis resistance tends to be improved.

The polystyrene-based resin preferably contains elemental zinc in a proportion of from 0.1 to 1000.0 ppm by mass with respect to 100 parts by mass of the polystyrene-based resin. The content of the elemental zinc is, with respect to 100 parts by mass of the polystyrene-based resin, more preferably 1.0 ppm by mass or more, further preferably 3.0 ppm by mass or more, still further preferably 5.0 ppm by mass or more, and still further preferably 10.0 ppm by mass or more. By setting the content to be equal to or more than the above lower limit value, laser marking properties tend to be improved. The content of the elemental zinc is, with respect to 100 parts by mass of the polystyrene-based resin, more preferably 800.0 ppm by mass or less, further preferably 600.0 ppm by mass or less, still further preferably 400.0 ppm by mass or less, still further preferably 300.0 ppm by mass or less, and still further preferably 250.0 ppm by mass or less. By setting the content to be equal to or less than the above upper limit value, hydrolysis resistance tends to be improved.

Further, it was found that among the metal elements contained in the styrene-based resin, the total amount of elemental iron and elemental zinc also tended to increase the amount of gas generated. In particular, it was found that elemental iron and elemental zinc potentially act as reaction catalysts with the components in the resin composition, and tend to generate large amounts of other gas components other than styrene oligomers and styrene. Gas components other than styrene oligomers and styrene are mainly hydrocarbon gases, which may have an adverse effect depending on the application. In this embodiment, it is inferred that by reducing the total amount of elemental zinc in addition to elemental iron, the generation of such other gas components other than styrene oligomers and styrene can be effectively suppressed. On the other hand, it was found that among the metal elements contained in the styrene-based resin, other metal elements (for example, calcium and magnesium) do not significantly affect the amount of gas generated for the resin composition of this embodiment.

Specifically, the total amount of elemental iron and elemental zinc contained in the polystyrene-based resin is, with respect to 100 ppm by mass of the polystyrene-based resin, preferably 1 ppm by mass or more, more preferably ppm by mass or more, further preferably 3 ppm by mass or more, still further preferably 5 ppm by mass or more, and still further preferably 7 ppm by mass or more. By setting the total amount to be equal to or more than the above lower limit value, laser marking properties tend to be further improved. Further, the upper limit value of the total amount of elemental iron and elemental zinc contained in the polystyrene-based resin is, with respect to 100 parts by mass of the polystyrene-based resin, preferably 280 ppm by mass or less, more preferably 200 ppm by mass or less, further preferably ppm by mass or less, still further preferably 150 ppm by mass or less, and still further preferably 100 ppm by mass or less. By setting the total amount to be equal to or less than the above upper limit value, suppression of the amount of generated gas tends to be improved.

Examples of the polystyrene-based resin of this embodiment include a homopolymer of a styrene-based monomer, a copolymer of a styrene-based monomer and a monomer copolymerizable with the styrene-based monomer, and the like. In the copolymer of a styrene-based monomer and a copolymerizable monomer, the styrene-based monomer is, of the monomer total, preferably 50% by mass or more, more preferably 60% by mass or more, and may be 70% by mass or more, more than 80% by mass, or 85% by mass or more.

Styrene-based monomer means styrene and styrenes having a substituent, and examples thereof include styrene, $\alpha$-methylstyrene, chlorostyrene, methylstyrene, and tert-butylstyrene.

The polystyrene-based resin used in this embodiment preferably contains a polystyrene resin and/or a rubber-reinforced polystyrene resin. In particular, it is preferable for the resin composition to contain both a polystyrene resin and a rubber-reinforced polystyrene resin, since a molded body having excellent laser marking properties can be obtained.

More specifically, examples of the polystyrene-based resin include resins such as polystyrene resin, an acrylonitrile-styrene copolymer (AS resin), high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), an acrylonitrile-ethylenepropylene rubber-styrene copolymer (AES resin), and a styrene-IPN type rubber copolymer.

In this embodiment, the polystyrene-based resin is preferably polystyrene resin, an acrylonitrile-styrene copolymer (AS resin), high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), or an acrylonitrile-ethylenepropylene rubber-styrene copolymer (AES resin), and more preferably is polystyrene resin and/or a high-impact polystyrene resin (HIPS).

It is also preferable that a portion of the polystyrene-based resin used in this embodiment is a styrene-maleic acid polymer (preferably a styrene-maleic anhydride polymer). The styrene-maleic acid polymer acts as a compatibilizer between the polybutylene terephthalate resin and the polystyrene resin and/or rubber-reinforced polystyrene resin. As a result, the strength of the molded body obtained can be increased.

In the case of adding a styrene-maleic acid polymer, the content thereof is, with respect to a total of 100 parts by mass of the polybutylene terephthalate resin and the polystyrene-based resin, preferably 1 part by mass or more, more preferably 3 parts by mass or more, further preferably 5 parts by mass or more, still further preferably 8 parts by mass or more, and still further preferably 10 parts by mass or more. By setting the content to be equal to or more than the above lower limit value, the strength of the obtained molded body tends to be higher. Further, the content of the styrene-maleic acid polymer is, with respect to a total of 100 parts by mass of the polybutylene terephthalate resin and the polystyrene-based resin, preferably 25 parts by mass or less, more preferably 20 parts by mass or less, and further preferably 18 parts by mass or less, and more preferably 18 parts by mass or less. By setting the content to be equal to or less than the above upper limit value, the obtained molded body tends to maintain a high level of heat resistance.

It is noted that the polycarbonate resin described later also acts as a compatibilizer. In addition, in this embodiment, other compatibilizers other than styrene-maleic acid polymers and the polycarbonate resin may also be used. In the case of using a polycarbonate resin and/or other compatibilizer, it is preferable that the total amount of these is within the above ranges.

The polystyrene-based resin used in this embodiment may or may not have a monomer unit having an epoxy group, or may be substantially free of a monomer unit having an epoxy group. "Substantially free of" means here a case where, of the monomer units constituting the polystyrene-based resin, the proportion of monomer units having an epoxy group is 10% by mass or less of the total monomer units, preferably 5% by mass or less, more preferably 3% by mass or less, further preferably 1% by mass or less, and still further preferably 0.1% by mass or less.

The polystyrene-based resin used in this embodiment may have a vinyl group (preferably a (meth)acryloyl group) at a terminal, or may be substantially free of a vinyl group (furthermore a (meth)acryloyl group) at a terminal. "Substantially free of" means here a case where, of the terminal groups of the polystyrene-based resin, the proportion of terminal groups having a vinyl group (preferably a (meth)acryloyl group) is 10% by mass or less of the total monomer units of the polystyrene-based resin, preferably 5% by mass or less, more preferably 3% by mass or less, further preferably 1% by mass or less, and still further preferably 0.1% by mass or less.

The polystyrene-based resin preferably has a melt viscosity ($\eta$) at 250°C and a shear rate of 912 sec$^{-1}$ of 80 Pa·sec or more, more preferably 90 Pa·sec or more, further preferably 100 Pa·sec or more, still further preferably 110 Pa·sec or more, still further preferably 120 Pa·sec or more, and still further preferably 130 Pa·sec or more. By setting the melt viscosity to be equal to or more than the above lower limit value, heat resistance tends to be further improved. The upper limit value of the melt viscosity of the polystyrene-based resin is preferably 500 Pa·sec or less, more preferably 300 Pa·sec or less, further preferably 200 Pa·sec or less, and still further preferably 180 Pa·sec or less, and still further preferably 160 Pa·sec or less. By setting the melt viscosity to be equal to or less than the above upper limit value, heat resistance and low-warpage tend to be further improved.

When the resin composition of this embodiment contains two or more types of polystyrene-based resins, the melt viscosity of the mixture preferably falls within the ranges described above.

The melt viscosity in this embodiment can be measured in accordance with ISO 11443 by using a capillary rheometer and a slit die rheometer. Specifically, the melt viscosity can be calculated from the stress when an orifice having a capillary diameter of 1 mm and a capillary length of 30 mm with a furnace body having an inner diameter of 9.5 mm are combined, and a piston is pushed in at a rate of 75 mm/min.

In this embodiment, in particular, the intrinsic viscosity (IV) of the polybutylene terephthalate resin is preferably from 0.3 to 0.8 dL/g, and the melt viscosity ($\eta$) of the polystyrene-based resin at 250°C and 912 sec$^{-1}$ is preferably 80 Pa·sec or more. With such a configuration, heat resistance and low-warpage tend to be further improved.

The melt volume rate (MVR) of the polystyrene-based resin used in this embodiment measured at 250°C and a load of 2.16 kgf is preferably 18 cm$^3$/10 minutes or more, more preferably 22 cm$^3$/10 minutes or more, further preferably 26 cm$^3$/10 minutes or more, may be 30 cm$^3$/10 minutes or more, and may be 35 cm$^3$/10 minutes or more. By setting the MVR to be equal to or more than the above lower limit value, heat resistance tends to be further improved. Further, the upper limit value of the MVR is preferably 200 cm$^3$/10 minutes or less, more preferably 160 cm$^3$/10 minutes or less, further preferably 120 cm$^3$/10 minutes or less, still further preferably 90 cm$^3$/10 minutes or less, and still further preferably 60 cm$^3$/10 minutes or less. By setting the MVR to be equal to or less than the above upper limit value, heat resistance and low-warpage tend to be further improved.

When the resin composition of this embodiment contains two or more types of polystyrene-based resins, the MVR of the mixture preferably falls within the ranges described above.

Examples of a method for producing such a polystyrene-based resin include known methods, such as emulsion polymerization, solution polymerization, suspension polymerization, and bulk polymerization.

Details regarding the polystyrene-based resin may be found in the descriptions in paragraphs 0061 to 0069 of Japanese Patent Laid-Open No. 2017-052925 A and the descriptions in paragraphs 0021 to 0031 and paragraphs 0057 to 0064 of Japanese Patent Laid-Open No. 2017-052262 A, the contents of which are incorporated herein by reference.

The polystyrene-based resin used in this embodiment may be a virgin product or a recycled product, but is preferably a recycled product.

Examples of recycled polystyrene-based resins include products obtained through material recycling, in which collected used polystyrene-based resin molded bodies are crushed and washed for reuse, products obtained through chemical recycling (chemical decomposition), and the like.

The content of the polystyrene-based resin in the resin composition of this embodiment (total amount of the polystyrene-based resin including the styrene-maleic acid polymer) is, with respect to 100 parts by mass of the polybutylene terephthalate resin, preferably 10 parts by mass or more, more preferably 50 parts by mass or more, further preferably more than 100 parts by mass, still further preferably 120 parts by mass or more, and still further preferably 150 parts by mass or more. By setting the content to be equal to or more than the above lower limit value, low-warpage tends to be further improved. Further, the upper limit value of the content of the polystyrene-based resin is, with respect to 100 parts by mass of the polybutylene terephthalate resin, preferably 250 parts by mass or less, more preferably 220 parts by mass or less, further preferably 200 parts by mass or less, and still further preferably 180 parts by mass or less. By setting the content to be equal to or less than the above upper limit value, the effect of suppressing a decrease in weld strength and impact strength tends to be further improved.

The resin composition of this embodiment may contain only one type of the polystyrene-based resin, or may contain two or more types of the polystyrene-based resin. When two or more types are included, the total amount is preferably within the ranges described above.

The content of the polybutylene terephthalate resin is, with respect to a total of 100 parts by mass of the polybutylene terephthalate resin and the polystyrene-based resin, preferably 20 parts by mass or more and less than 50 parts by mass, more preferably 25 parts by mass or more and less than 50 parts by mass, further preferably 30 parts by mass or more and less than 50 parts by mass, and still further preferably from 30 to 48 parts by mass. Further, the content of the polystyrene-based resin is, with respect to a total of 100 parts by mass of the polybutylene terephthalate resin and the polystyrene-based resin, preferably more than 50 parts by mass and 75 parts by mass or less, and further preferably more than 50 parts by mass and 70 parts by mass or less, and still further preferably from 52 to 70 parts by mass or less.

In this embodiment, it is preferable that the intrinsic viscosity ($IV_A$) of the polybutylene terephthalate resin, the mass proportion of the polybutylene terephthalate resin to the total content of the polybutylene terephthalate resin and the polystyrene-based resin, the melt viscosity ($\eta_B$) of the polystyrene-based resin, and the mass proportion of the polystyrene-based resin to the total content of the polybutylene terephthalate resin and the polystyrene-based resin satisfy the following relational expression (I).

$$[\text{Amount ratio of polybutylene terephthalate resin}/IV_A] \geq [\text{Amount ratio of polystyrene-based resin}/(\eta_B/80)] \qquad (I)$$

By satisfying formula (I), the polybutylene terephthalate resin tends to form a sea (matrix), and the resin composition obtained can exhibit higher heat resistance, a higher degree of low-warpage, and the chemical resistance of the polybutylene terephthalate resin can also be maintained.

<Polycarbonate resin>

The resin composition of this embodiment may include a polycarbonate resin. In this embodiment, the polycarbonate resin functions as a compatibilizer for the polyethylene terephthalate resin and the styrene-based resin.

The polycarbonate resin is an optionally-branched homopolymer or copolymer obtained by reacting a dihydroxy compound or a dihydroxy compound and a small amount of a polyhydroxy compound with phosgene or a carbonic acid diester. The method for producing the polycarbonate resin is not particularly limited, and a polycarbonate resin produced by a conventionally-known phosgene method (interfacial polymerization method) or melting method (ester exchange method) can be used.

The raw material dihydroxy compound is preferably an aromatic dihydroxy compound, more preferably a bisphenol, further preferably 2,2-bis(4-hydroxyphenyl)propane (= bisphenol A), tetramethylbisphenol A, bis(4-hydroxyphenyl)-p-diisopropylbenzene, hydroquinone, resorcinol, 4,4-dihydroxydiphenyl, and the like, and still further preferably bisphenol A. Further, it is also possible to use a compound in which one or more tetraalkylphosphonium sulfonates are bonded to the above-described aromatic dihydroxy compound.

Among the polycarbonate resins mentioned above, an aromatic polycarbonate resin derived from 2,2-bis(4-hydroxyphenyl)propane (bisphenol A type polycarbonate resin), or an aromatic polycarbonate copolymer derived from 2,2-bis(4-hydroxyphenyl)propane and another aromatic dihydroxy compound is preferable. Further, a copolymer mainly composed of an aromatic polycarbonate resin, such as a copolymer with a polymer or oligomer having a siloxane structure, may be used. In addition, two or more of the above-described polycarbonate resins may be used in combination.

A monovalent aromatic hydroxy compound may be used to adjust the molecular weight of the polycarbonate resin, and examples thereof include m- and p-methylphenol, m- and p-propylphenol, p-tert-butylphenol, p-long-chain-alkyl-substituted phenol, and the like.

The viscosity average molecular weight (Mv) of the polycarbonate resin is preferably 5,000 or more, more preferably 10,000 or more, and further preferably 13,000 or more. By using a polycarbonate resin having a viscosity average molecular weight of 5,000 or more, the mechanical strength of the obtained resin composition tends to be further improved. Further, the viscosity average molecular weight (Mv) of the polycarbonate resin is preferably 60,000 or less, more preferably 40,000 or less, and further preferably 30,000 or less. By using a polycarbonate resin having a molecular weight of 60,000 or less, the fluidity of the resin composition tends to be improved and the moldability tends to be improved.

When containing two or more types of polycarbonate resins, it is preferable that the mixture satisfies the above ranges.

In this embodiment, the viscosity average molecular weight (Mv) of the polycarbonate resin indicates a value calculated from the following Schnell's viscosity formula by measuring the viscosity of a solution of the polycarbonate resin in methylene chloride at 20°C using an Ubbelohde viscometer to determine the intrinsic viscosity ([η]).

$$[\eta]=1.23 \times \times 10^{-4} Mv^{0.83}$$

The melt flow rate (MFR) of the polycarbonate resin measured in accordance with JIS K7210 (temperature 300°C, load 1.2 kgf) is preferably 1 g/10 minutes or more, more preferably 8 g/10 minutes or more, further preferably 10 g/10 minutes or more, still further preferably 18 g/10 minutes or more, still further preferably 20 g/10 minutes or more, and still further preferably 30 g/10 minutes or more. By setting the MFR to be equal to or more than the above lower limit value, the electromagnetic wave absorption rate of the obtained resin composition or molded body tends to be further improved. Further, the upper limit of the MFR is, for example, 100 g/10 minutes or less, and further may be 80 g/10 minutes or less.

The method for producing the polycarbonate resin is not particularly limited, and a polycarbonate resin produced by either a phosgene method (interfacial polymerization method) or melting method (ester exchange method) can be used. In addition, a polycarbonate resin produced by subjecting a polycarbonate resin produced by a melting method to a post-treatment to adjust the amount of terminal OH groups is also preferable.

When the resin composition of this embodiment contains a polycarbonate resin, the content thereof is, with respect to 100 parts by mass of the polybutylene terephthalate resin, preferably 1 part by mass or more, more preferably 5 parts by mass or more, further preferably 10 parts by mass or more, still further preferably 15 parts by mass or more, and still further preferably 20 parts by mass or more. By setting the content to be equal to or more than the above lower limit value, heat resistance and mechanical strength tend to be further improved. Further, the upper limit of the content of the polycarbonate resin is, with respect to 100 parts by mass of the polybutylene terephthalate resin, preferably less than 100 parts by mass, more preferably 80 parts by mass or less, further preferably 50 parts by mass or less, and still further preferably 40 parts by mass or less. By setting the content to be equal to or less than the above upper limit, heat resistance tends to be further improved.

The resin composition of this embodiment may contain only one type of the polycarbonate resin, or may contain two or more types of the polycarbonate resin. When the resin composition contains two or more types, the total amount is preferably within the ranges described above.

The content of the polycarbonate resin is, with respect to a total of 100 parts by mass of the polybutylene terephthalate resin and the polystyrene-based resin, preferably 1 part by mass or more, more preferably 3 parts by mass or more, further preferably 5 parts by mass or more, still further preferably 8 parts by mass or more, and still further preferably 10 parts by mass or more. By setting the content to be equal to or more than the above lower limit value, the compatibility between the polybutylene terephthalate resin and the polystyrene resin and/or rubber-reinforced polystyrene resin tends to be further improved, and the mechanical strength of the obtained molded body tends to be further improved. Further, the content of the polycarbonate resin is, with respect to a total of 100 parts by mass of the polybutylene terephthalate resin and the polystyrene-based resin, preferably 25 parts by mass or less, more preferably 20 parts by mass or less, and further preferably 18 parts by mass or less. By setting the content to be equal to or less than the above upper limit value, the heat resistance of the obtained molded body tends to be maintained at a high level.

As described above, the styrene-maleic acid polymer also acts as a compatibilizer between the polybutylene terephthalate resin and the polystyrene resin and/or rubber-reinforced polystyrene resin. Therefore, when the resin composition of this embodiment contains a styrene-maleic acid polymer or other compatibilizer, it is preferable that the total of these is within the above ranges.

In addition, the resin composition of this embodiment has a mass ratio of the content of the compatibilizer (preferably a polycarbonate resin and/or a styrene-maleic acid polymer) to the content of the polybutylene terephthalate resin, that is, (compatibilizer)/polybutylene terephthalate resin, of preferably 0.1 or more, and more preferably 0.2 or more, and of preferably 0.7 or less, more preferably 0.6 or less, further preferably 0.5 or less, and still further preferably 0.4 or less. By setting this ratio to be in such a range, it is possible to develop superior strength while maintaining high heat resistance.

The polycarbonate resin used in this embodiment may be a virgin product or a recycled product. Examples of recycled polycarbonate resins include products obtained through material recycling, in which collected used polycarbonate resin molded bodies are crushed and washed for reuse, products obtained through chemical recycling (chemical decomposition), and the like.

In the resin composition of this embodiment, the total amount of the polybutylene terephthalate resin, the styrene-based resin, and the optionally-added polycarbonate resin preferably accounts for 50% by mass or more of the resin composition, more preferably 55% by mass or more, and when no reinforcing material is included, further preferably 90% by mass or more. Further, the upper limit of the total amount of the polybutylene terephthalate resin, the styrene-based resin, and the optionally-added polycarbonate resin contained in the resin composition of this embodiment may be 100% by mass. When including a reinforcing material, the total amount of the polybutylene terephthalate resin, the styrene-based resin, the optionally-added polycarbonate resin, and the reinforcing material is preferably 100% by mass.

<Reinforcing material>

The resin composition of this embodiment may or may not include a reinforcing material. By including the reinforcing material, the mechanical strength of the molded body obtained can be improved.

The reinforcing material that can be used in this embodiment is not particularly limited in terms of its type and the like, and may be any of a fiber, a filler, beads, and the like, but a fiber is preferable.

When the reinforcing material is a fiber, the fiber may be a short fiber or a long fiber.

When the reinforcing material is a short fiber, a filler, beads, or the like, examples of the resin composition of this embodiment include pellets, powdered pellets, a film formed from such pellets, and the like.

Examples of the raw material of the reinforcing material include inorganic materials such as glass, carbon (carbon fiber, etc.), alumina, boron, ceramic, metal (steel, etc.), as well as organic substances such as plants (including Kenaf, bamboo, etc.), aramid, polyoxymethylene, aromatic polyamide, polyparaphenylene benzobisoxazole, and ultra-high molecular weight polyethylene, and glass is preferred.

The resin composition of this embodiment preferably contains glass fiber as the reinforcing material.

The glass fiber is selected from glass compositions such as A-glass, C-glass, E-glass, R-glass, D-glass, M-glass, and S-glass, and E-glass (alkali-free glass) is particularly preferred.

Glass fiber refers to a fibrous material that has a perfect circular or polygonal cross-sectional shape when cut at right angles to the length direction. The glass fiber has a single fiber number average fiber diameter of usually from 1 to 25 $\mu$m, and preferably 5 to 17 $\mu$m. By setting the number average fiber diameter to be equal to or more than 1 $\mu$m, the moldability of the resin composition tends to be further improved. By setting the number average fiber diameter to be equal to or less than 25 $\mu$m, the appearance of the obtained molded body tends to improve and a reinforcement effect also tends to improve. The glass fiber may be a single fiber or a plurality of twisted single fibers.

The form of the glass fiber may be any of glass roving, which is made by continuously winding a single fiber or a plurality of twisted-together strands, chopped strands cut to a length of from 1 to 10 mm (i.e., glass fiber having a number average fiber length of from 1 to 10 mm), and milled fiber that has been crushed to a length of about 10 to 500 $\mu$m (i.e., glass fiber having a number average fiber length of from 10 to 500 $\mu$m), but chopped strands having a length of from 1 to 10 mm are preferred. Glass fibers having different shapes can also be used together.

A glass fiber having an irregular cross-sectional shape is also preferred. This irregular cross-sectional shape means that the oblateness, which is represented by the major axis/minor axis ratio of a cross section perpendicular to the length direction of the fiber, is, for example, from 1.5 to 10, and of that, preferably from 2.5 to 10, further preferably from 2.5 to 8, and particularly from 2.5 to 5.

To improve affinity with the resin component, the glass fiber may be surface-treated with, for example, a silane compound, an epoxy compound, a urethane compound, and the like, or have been oxidized, as long as the properties of the resin composition of this embodiment are not significantly impaired.

When the resin composition of this embodiment contains a reinforcing material (preferably glass fiber), the content thereof is, with respect to a total amount of the thermoplastic resins (polybutylene terephthalate resin, styrene-based resin, and optionally-added polycarbonate resin) of 100 parts by mass, preferably 10 parts by mass or more, more preferably 20 parts by mass or more, further preferably 30 parts by mass or more, and still further preferably 40 parts by mass or more. By setting the content to be equal to or more than the above lower limit value, the mechanical strength of the obtained molded body tends to be further increased. Further, the content of the reinforcing material (preferably glass fiber) is, with respect to a total amount of the thermoplastic resins included in the resin composition, preferably 100 parts by mass or less, more preferably 90 parts by mass or less, further preferably 85 parts by mass or less, still further preferably 80 parts by mass or less, and still further preferably 75 parts by mass or more. By setting the content to be equal to or less than the above upper limit value, the appearance of the molded body tends to be improved, and the fluidity of the resin composition to be further improved.

The content of the reinforcing material (preferably glass fiber) in the resin composition of this embodiment is, of the resin composition, preferably 10% by mass or more, more preferably 15% by mass or more, further preferably 20% by mass or more, and still further preferably 25% by mass or more. Further, the content of the reinforcing material (preferably glass fiber) is, of the resin composition, more preferably 50% by mass or less, further preferably 45% by mass or less, further preferably 40% by mass or less, and still further preferably 35% by mass or less. By setting the content to be equal to or more than the above lower limit value, mechanical strength tends to be further increased. Further, by setting the content to be equal to or less than the above upper limit value, the appearance of the molded body tends to be improved, and the fluidity of the resin composition when melted tends to be further improved.

The resin composition of this embodiment may contain only one type of the reinforcing material (preferably glass fiber), or may contain two or more types of the reinforcing material. When two or more types are included, the total amount is preferably within the ranges described above.

<Other components>

The resin composition of this embodiment may optionally include other components in addition to those described above, as long as the various desired physical properties are not significantly impaired. Examples of other components include thermoplastic resins other than the polybutylene terephthalate resin, the polystyrene-based resin, and the polycarbonate resin, and various resin additives. In addition, the resin composition may contain one type of such other components, or contain two or more types in any combination and ratio.

Specific examples of resin additives include a stabilizer (thermal stabilizer, light stabilizer), a mold release agent, a colorant (pigment, dye), a reactive compound, a nucleating agent, a flame retardant, flame retardant aid, a filler, an antistatic agent, an antifogging agent, an antiblocking agent, a fluidity improver, a plasticizer, a dispersant, an antibacterial agent, and the like.

In the resin composition of this embodiment, the total amount of the polybutylene terephthalate resin, the polystyrene-based resin, and optionally-added components is 100% by mass.

«Stabilizer»

The resin composition of this embodiment may include a stabilizer (light stabilizer and/or heat stabilizer).

Examples of the stabilizer include a hindered phenol compound, a hindered amine compound, a phosphorus compound, a sulfur stabilizer, and the like. Among these, a hindered phenol compound and/or a phosphorus compound is preferred.

Specific details regarding the stabilizer may be found in the description in paragraphs 0067 to 0075 of Japanese Patent Laid-Open No. 2021-063196 A, the descriptions in paragraphs 0046 to 0057 of Japanese Patent Laid-Open No. 2018-070722 A, the descriptions in paragraphs 0030 to 0037 of Japanese Patent Laid-Open No. 2019-056035 A, and the descriptions in paragraphs 0066 to 0078 of International Publication No. WO 2017/038949, the contents of which are incorporated herein by reference.

When the resin composition of this embodiment includes a stabilizer, the content thereof is, with respect to a total amount of the thermoplastic resins (polybutylene terephthalate resin, styrene-based resin, and optionally-added polycarbonate resin) of 100 parts by mass, preferably 0.01 parts by mass or more, and more preferably 0.05 parts by mass or more. By setting the content to be equal to or more than the above lower limit value, there tends to be an improvement in the effect of suppressing thermal deterioration and oxidative deterioration of the resin during melt-kneading, molding, and use as a molded body. Further, the upper limit value of the content of the stabilizer is, with respect to a total of 100 parts by mass of the thermoplastic resins, preferably 2.0 parts by mass or less, and more preferably 1.5 parts by mass or less. By setting the content to be equal to or less than the above upper limit value, it is possible to effectively suppress adverse effects on appearance and physical properties caused by the aggregation of additives such as the stabilizer.

The resin composition of this embodiment may contain only one type of the stabilizer, or may contain two or more types of the stabilizer. When the resin composition contains two or more types, the total amount is preferably within the ranges described above.

«Mold release agent»

The resin composition of this embodiment may include a mold release agent. Examples of the mold release agent include a montanic acid ester wax, a polyolefin wax, a higher fatty acid, an ester compound, and the like, and a montanic acid ester wax and/or a polyolefin wax is preferred.

Specific details regarding the mold release agent may be found in the descriptions in paragraphs 0063 to 0077 of Japanese Patent Laid-Open No. 2018-070722 A and the descriptions in paragraphs 0090 to 0098 of Japanese Patent Laid-Open No. 2019-123809 A, the contents of which are incorporated herein by reference.

When the resin composition of this embodiment includes a mold release agent, the content thereof is, with respect to a total amount of the thermoplastic resins (polybutylene terephthalate resin, styrene-based resin, and optionally-added polycarbonate resin) of 100 parts by mass, preferably 0.01 parts by mass or more, and more preferably 0.08 parts by mass or more. Further, the upper limit value of the content of the mold release agent is, with respect to 100 parts by mass of the thermoplastic resin, preferably 5.0 parts by mass or less, and more preferably 1.0 parts by mass or less.

The resin composition of this embodiment may contain only one type of the mold release agent, or may contain two or more types of the mold release agent. When the resin composition contains two or more types, the total amount is preferably within the ranges described above.

«Colorant»

The resin composition of this embodiment may include a colorant (dye and/or pigment). The colorant may be a dye or a pigment, but a pigment is preferred.

The colorant may be either an organic colorant or an inorganic colorant. Further, the colorant may be either a chromatic colorant or an achromatic colorant.

Examples of the colorant include the descriptions in paragraphs 0121 to 0123 of Japanese Patent Laid-Open No. 2021-101020 A and the descriptions in paragraphs 0088 to 0090 of Japanese Patent Laid-Open No. 2019-188393 A, the contents of which are incorporated herein by reference.

The resin composition of this embodiment preferably contains carbon black. There are no restrictions on the type, raw material, or production method of the carbon black, and any of furnace black, channel black, acetylene black, Ketjen black, and the like can be used. There is no particular restriction on the number average particle size, but about 5 to 60 nm is preferred.

It is preferable to blend the carbon black as a masterbatch mixed in advance with a thermoplastic resin, preferably a polyester resin, and more preferably a polybutylene terephthalate resin.

When the resin composition of this embodiment includes a colorant, the content thereof is, with respect to a total amount of the thermoplastic resins (polybutylene terephthalate resin, styrene-based resin, and optionally-added polycarbonate resin) of 100 parts by mass, preferably 0.01 parts by mass or more, more preferably 0.05 parts by mass or more, further preferably 0.1 parts by mass or more. By setting the content to be equal to or more than the above lower limit value, the coloring effect can be more effectively exhibited. Further, the upper limit value of the content of the colorant is, with respect to a total of 100 parts by mass of the thermoplastic resins, preferably 4 parts by mass or less, more preferably 3 parts by mass or less, further preferably 2 parts by mass or less, and still further preferably 1 part by mass or less. By setting the content to be equal to or less than the above upper limit value, the mechanical strength of the molded body obtained tends to be further improved.

The resin composition of this embodiment may contain only one type of colorant, or may contain two or more types of colorant. When the resin composition contains two or more types, the total amount is preferably within the ranges described above.

<Physical property values of resin composition>

The weld strength of the resin composition of this embodiment is preferably 19 MPa or more, more preferably 20 MPa or more, and further preferably 21 MPa or more. The upper limit of the weld strength is, for example, 30 MPa or less.

The weld strength is measured in accordance with the description in the examples later.

It is preferable that the amount of gas generated by the resin composition of this embodiment after a high-temperature heat treatment, in particular the amount of gas generated from components other than styrene oligomers and styrene, is low. Specifically, when the resin composition of this embodiment is heated at 270°C for 10 minutes and then subjected to HS-GC analysis, the amount of gas generated from components other than styrene oligomers and styrene with respect to 1 part by mass of the molded product is preferably 1500 ppm by mass or less, and more preferably 1000 ppm by mass or less. The gas lower limit value is ideally 0 ppm by mass, but practically 1 ppm by mass or more, and may be 100 ppm by mass or more.

The amount of gas generated by the resin composition is measured in accordance with the description in the examples later.

<Method for producing resin composition>

The resin composition of this embodiment can be produced by a conventional method for preparing resin compositions. Usually, each component and the various additives to be optionally added are thoroughly mixed together, and then melt-kneaded using a single-screw or twin-screw extruder. Alternatively, the resin composition of this embodiment can be prepared without mixing each component in advance, by pre-mixing only a part of the components, and feeding the mixture into an extruder using a feeder, and melt-kneading. Also, a masterbatch may be prepared by melt-kneading a part of the components such as the colorant with a thermoplastic resin, and then adding the remaining components and melt-kneading the mixture.

In addition, when using an inorganic filler, it is preferred to feed the inorganic filler from a side feeder at a point along the cylinder of the extruder.

The heating temperature during melt-kneading can be normally selected as appropriate from the range of 220 to 300°C. If the temperature is too high, decomposition gas tends to be generated, which may cause opacity. Therefore, it is desirable to select a screw configuration that takes shear heat generation into consideration. In order to suppress decomposition during the kneading and subsequent molding, it is desirable to use an antioxidant and a heat stabilizer.

<Method for producing molded body>

The resin composition of this embodiment is molded according to a known method.

The method for producing the molded body is not particularly limited, and any molding method commonly used for resin compositions can be adopted. Examples include injection molding, ultra-high-speed injection molding, injection compression molding, two-color molding, gas-assisted blow molding, molding using a heat-insulated mold, molding using a rapid heating mold, foam molding (including supercritical fluid), insert molding, IMC (in-mold coating molding) molding, extrusion molding, sheet molding, thermoforming, rotational molding, lamination molding, press molding, blow molding, and the like, among which an injection molding method is preferred.

Details regarding the injection molding method may be found in the descriptions in paragraphs 0113 to 0116 of Japanese Patent Laid-Open No. 6183822 B, the contents of which are incorporated herein by reference.

Further, the mold temperature during mold molding such as injection molding is preferably from 40 to 150°C.

<Uses>

The resin composition of this embodiment is used as a molded body formed from the resin composition. The uses of the resin composition or molded body are not particularly limited, but the resin composition or molded body may be preferably used for an electrical/electronic devices or components, OA devices or components, information terminal devices or components, mechanical components, home appliances, vehicle components (interior/exterior of automobiles), construction materials, various containers, leisure goods/miscellaneous goods, lighting equipment, and the like. In particular, the resin composition of this embodiment can be suitably used for housings of interior and exterior parts of automobiles.

Further, the resin composition of this embodiment can be laser marked, and is preferably used in various applications that require laser marking.

In addition, the resin composition of this embodiment has high weld strength, and is therefore suitable as an injection molded body. A characteristic of injection molded bodies is that they have a weld line.

[Examples]

The present invention will now be explained in more detail with reference to the following examples. The materials, usage amounts, proportions, processing details, processing procedures, and the like described in the following examples can be changed as appropriate without departing from the spirit of the present invention. Therefore, the scope of the present invention is not limited to the specific examples shown below.

If the measuring equipment and the like used in the examples is difficult to obtain due to discontinuation, for example, the measurements can be performed using other equipment with an equivalent performance.

1. Raw materials

The following raw materials were used.

[Table 1]

| Raw material | Details |
|---|---|
| PBT | Polybutylene terephthalate resin<br>Trade name: NOVADURAN 5007, manufactured by Mitsubishi Engineering-Plastics Corporation<br>Intrinsic viscosity: 0.70 dL/g |
| PC | Polycarbonate resin<br>Trade name: H400FN, manufactured by Mitsubishi Engineering-Plastics Corporation<br>MVR=60 $cm^3$/10min. |
| PCR-PC | Recycled polycarbonate resin<br>Trade name: PC3011, MVR = 5 $cm^3$/10min, manufactured by Aucell. |
| Virgin PS | Virgin polystyrene resin<br>Manufacturer: PS Japan, trade name: HH105 |
| PCR-PS-1 | Recycled polystyrene resin (containing 10% by weight HIPS)<br>Manufacturer: LK, trade name: LK-59 |
| PCR-PS-2 | Recycled polystyrene resin<br>Trade name: KD-GP, manufactured by Kansai Chemicals Group |
| PCR-PS-3 | Recycled polystyrene resin<br>Trade name: PCR-GPPS, manufactured by INTCO |
| PCR-PS-4 | Recycled polystyrene resin<br>Manufacturer: Topcentral, trade name: T301 |
| PCR-PS-5 | Recycled polystyrene resin<br>Trade name: PS1GER100, manufactured by Eicou Bussan |
| PCR-PS-6 | Recycled polystyrene resin<br>Manufacturer: LK, trade name: LK-56 |

HIPS stands for high-impact polystyrene resin.

[Table 2]

| Raw material | Details |
|---|---|
| Stabilizer 1 | Phosphorous stabilizer<br>Manufacturer: ADEKA, trade name: AX-71 |
| Stabilizer 2 | Hindered phenol stabilizer<br>Irganox1010, manufactured by BASF |
| Mold release agent 1 | Montanic acid ester<br>LicowaxE, manufactured by Clariant |
| Mold release agent 2 | Light amide,<br>WH255, manufactured by Kyoeisha Chemical Co., Ltd. |
| CB-MB | Carbon black masterbatch<br>Polybutylene terephthalate resin (80% by mass), carbon black (30% by mass)<br>RCB20, manufacturer: Mitsubishi Engineering-Plastics Corporation |
| Reinforcing material | Glass fiber<br>Manufacturer: Nippon Electric Glass Co., Ltd., trade name: T187 |

The details of the polystyrene-based resin were as follows.

[Table 3]

| | Virgin PS | PCR-PS-1 | PCR-PS-2 | PCR-PS-3 | PCR-PS-4 | PCR-PS-5 | PCR-PS-6 |
|---|---|---|---|---|---|---|---|
| MVR ($cm^3$/10 minutes) | 17 | 27 | 41 | 41 | 68 | 31 | 164 |
| Melt viscosity (Pa·s) | 123 | 116 | 97 | 101 | 92 | 104 | 68 |
| $Mw \times 10^{-5}$ | 3.12 | 2.02 | 2.72 | 2.39 | 2.22 | 2.94 | 1.90 |
| Mw/Mn | 3.10 | 3.25 | 4.13 | 4.77 | 3.43 | 4.57 | 3.82 |
| Ash content (% by mass) | 0 | 0.6 | 0.009 | 0.55 | 0.001 | 0 | 0.2 |
| Mg (ppm by mass) | n.d | 120.0 | 1.3 | 300.0 | 0.2 | 0.2 | 37.0 |
| Ca (ppm by mass) | 0.1 | 130.0 | 9.8 | 82.0 | 3.7 | 0.8 | 160.0 |
| Fe (ppm by mass) | n.d | 170.0 | 6.8 | 70.0 | 4.7 | 0.4 | 38.0 |
| Zn (ppm by mass) | n.d | 160.0 | 39.0 | 15.0 | 60.0 | 8.4 | 260.0 |

In Table 3 above, Mg (ppm by mass) indicates the amount of elemental magnesium in the polystyrene-based resin. The same applies for the other metals.

Further, $Mw \times 10^{-5}$ means the value obtained by multiplying the weight average molecular weight by $10^{-5}$. Therefore, for example, the Mw of the virgin PS is $3.12 \times 10^5$ (312,000).

In the above table, "n. d" indicates a value could not be detected.

<Measurement of melt volume rate (MVR)>

The MVR (unit: $cm^3$/10 minutes) of the polystyrene-based resin was measured using a melt indexer under conditions of 250°C and a load of 2.16 kgf.

The melt indexer used was manufactured by Takara Kougyou.

<Measurement of melt viscosity>

The melt viscosity of the polystyrene-based resin was measured at 250°C and a shear rate of 912 $sec^{-1}$ in accordance with ISO 11443.

Specifically, the melt viscosity was measured using a capillary rheometer and a slit die rheometer. Specifically, the melt viscosity was calculated from the stress when a piston is pushed in at a rate of 75 mm/min by combining an orifice having a capillary diameter of 1 mm and a capillary length of 30 mm with a furnace body having an inner diameter of 9.5 mm.

The unit is shown as Pa·s.

<Measurement of weight average molecular weight (Mw) and number average molecular weight (Mn)>

Molecular weight was measured using an HLC-8320GPC/EcoSEC (manufactured by TOSOH). The measurement conditions were as follows.

Column:Shodex KF-G + KF-805L $\times$ 3 + KF-800D
Detector: UV detector 254 nm
Column temperature: 40°C
Eluent:tetrahydrofuran (THF)

<Measurement of ash content>

The ash content was measured by ashing in an electric furnace at 500°C for 3 hours to burn only the resin component, and then calculating the ash content from the ratio of the weight of the residue.

The unit of ash proportion in the polystyrene-based resin is shown in % by mass.

The electric furnace used was "Electric Muffle Furnace KM-28" manufactured by Toyo Seisakusho Kaisha, Ltd.

<Measurement of metal element amounts>

The qualitative/semi-quantitative analysis of the metal elements in the polystyrene-based resin was performed by ICP emission spectrometry. In this case, as a pretreatment, 200 mg of a sample was weighed, the sample was subjected to Kjeldahl wet digestion (sulfuric acid/nitric acid, sulfuric acid/hydrogen peroxide), the volume was adjusted to 50 mL, and then ICP emission analysis was conducted by an acid concentration matching one-point calibration method. Units are shown in ppm by mass.

The ICP emission analysis was carried out by axial/radial photometry using an "iCAP76000uo" manufactured by Thermo Fisher Scientific.

2. Examples 1 to 5 and Comparative Examples 1 to 3

<Compound>

Each of the components, except for the glass fiber, shown in Table 1 or 2 were uniformly mixed in the proportions (parts by mass) shown in Table 4-1 or 4-2 using a tumbler mixer. The obtained mixture was fed into a twin-screw extruder ("TEX30α" manufactured by Japan Steel Works, Ltd.) through the main feed port. The cylinder set temperature of the first kneading section was 260°C, and the glass fiber was fed from a side feeder. The resin composition was melt-kneaded under conditions of a cylinder set temperature after addition of the glass fiber of 260°C and a screw rotation speed of 200 rpm, then rapidly cooled in a water tank and pelletized using a pelletizer to obtain pellets of the resin composition.

<Printability (ΔE)>

The optically-transparent resin composition pellets obtained above were dried at 120°C for 7 hours, and then a 60 mm × 60 mm × 1.5 mm thick plate (transparent resin member) for color tone measurement and transmittance measurement was injection molded using an injection molding machine (NEX80-9E manufactured by Nissei Plastic Industrial Co., Ltd.) at a cylinder temperature of 260°C and a mold temperature of 60°C under the following injection conditions.

(Injection conditions)

Holding pressure time: 10 sec
Cooling time: 10 sec
Injection speed: 90 mm/sec
Back pressure:5 MPa
Screw rotation speed: 100 rpm

Laser marking was performed on the center portion of the plate obtained above in a size of 16 mm × 50 mm square under the following conditions.

Laser marking device: LP-Z310 manufactured by Panasonic
Laser type: Yb fiber laser (wavelength 1064 nm)
Laser power: 1 W
Scan speed: 2000 mm/s
Print pulse period: 30 μs

A color difference ΔE between the laser marked portion and the non-laser marked portion of the plate obtained above was measured. The measurement was carried out using a spectrophotometric colorimeter compliant with ISO 7724/1, with a D65/10 (reflected illumination, 10° direction light reception) and SCE (specular component excluded) colorimetry, using a target mask SAV (diameter 4 mm). For the spectrophotometric colorimeter, a CM-3600d, manufactured by Konica Minolta Optics was used.

<Amount of warpage>

A disc having a diameter of 100 mm and a thickness of 1.6 mm was molded using an injection molding machine (NEX80 manufactured by Nissei Plastic Industrial Co., Ltd.) under conditions of a cylinder temperature of 260°C and a mold temperature of 80°C using a side gate mold, and the amount of warpage (unit: mm) of the disc was determined.
The amount of warpage here was determined by placing the disc on a flat plate, and taking the distance between the flat plate and the disc (on the flat plate side) at the portion where the distance between the flat plate and the disc was greatest.

<Tensile modulus and tensile strength>

The pellets obtained above were dried at 120°C for 5 hours, and then an ISO multipurpose test specimen (4 mm thick) was injection molded using an injection molding machine manufactured by Nippon Steel Corporation (mold clamping force 85 T) under conditions of a cylinder temperature of 250°C and a mold temperature of 80°C.
The tensile strength at break (unit: MPa) and tensile modulus (unit: MPa) were measured in accordance with ISO 527 using the above ISO multipurpose test piece (4 mm thickness).

<Nominal strain at fracture, fracture stress, and strain at fracture>

The nominal strain at fracture (unit: %), fracture stress (unit: MPa), and strain at fracture (unit: %) were measured in accordance with ISO 527-1 and 2 using the above ISO multipurpose test specimen (4 mm thickness).

<Bending strength, bending modulus, and maximum displacement>

The strength at the maximum bending point (unit: MPa), bending elastic modulus (unit: MPa), and maximum displacement (unit: mm) were measured in accordance with ISO 178 using the above ISO multipurpose test specimen (4 mm thickness).

<Charpy impact strength>

The notched Charpy impact strength (unit: $kJ/m^2$) of a notched test piece obtained by notching the above ISO multipurpose test specimen (4 mm thickness) was measured in accordance with ISO 179 at a temperature of 23°C.

<Measurement of amount of generated gas>

The amount of gas generated in the resin composition was measured in accordance with the following method.
A cut piece of the above ISO multipurpose test specimen was heated at 270°C for 10 minutes, and the obtained gas was analyzed. Gas analysis was performed by TD-GC/MS (Thermal Desorption (Auto Sampler)-Gas Chromatography/Mass Spectrometry) analysis. Regarding the obtained gas, the amount of the styrene component (styrene, styrene oligomers) and the total amount of gas were measured by decane conversion. The units of the styrene component (styrene, styrene oligomers) and the total amount of gas were mass per 1 g ($\mu$g/g) of the cut piece.
The gas analysis was performed using a TD-20 (TD), a GC-2010 Plus (GC), and a GCMS-QP2010 Ultra (MS) manufactured by Shimadzu Corporation.

<Weld strength (strength at maximum point)>

The test was conducted in accordance with ISO 527-1 and 2 using a 4 mm thick 1A type test specimen at a test speed of 5 mm/min. A test specimen having a weld in a center portion was molded under conditions of a cylinder temperature of 250°C, a mold temperature of 80°C, and a molding cycle of 40 seconds using a mold having a gate at two points on a surface center line in the longitudinal direction of the test piece (distance between gates 170 mm), and the weld tensile strength (unit: MPa) was measured.

<Load deflection temperature (1.80 MPa)>

A test specimen having 80 mm in length × 10 mm in width × 4 mm in thickness was cut out from the above ISO multipurpose test specimen (4 mm thick). Then, in accordance with ISO 75, the load deflection temperature (unit: °C) was measured when testing under a load of 1.80 MPa.

[Table 4-1]

|  |  | Example 1 | Example 2 | Example 3 | Example 4 |
|---|---|---|---|---|---|
| PBT |  | 22.9 | 22.9 | 22.9 | 22.9 |
| PC |  | 7.6 | 7.6 | 7.6 | 7.6 |
| PCR-PC |  |  |  |  |  |

(continued)

|  |  | Example 1 | Example 2 | Example 3 | Example 4 |
|---|---|---|---|---|---|
| Virgin PS | % by mass |  |  |  |  |
| PCR-PS-1 |  |  |  |  |  |
| PCR-PS-2 |  | 37.3 |  |  |  |
| PCR-PS-3 |  |  | 37.3 |  |  |
| PCR-PS-4 |  |  |  | 37.3 |  |
| PCR-PS-5 |  |  |  |  | 37.3 |
| PCR-PS-6 |  |  |  |  |  |
| Stabilizer 1 |  | 0.1 | 0.1 | 0.1 | 0.1 |
| Stabilizer 2 |  | 0.3 | 0.3 | 0.3 | 0.3 |
| Mold release agent 1 |  | 0.25 | 0.25 | 0.25 | 0.25 |
| Mold release agent 2 |  | 0.25 | 0.25 | 0.25 | 0.25 |
| CB-MB |  | 1.3 | 1.3 | 1.3 | 1.3 |
| Reinforcing material |  | 30 | 30 | 30 | 30 |
| Printability ∆E |  | 4.7 | 10.3 | 5.3 | 4.1 |
| Amount of warpage | mm | 0.51 | 0.35 | 0.33 | 0.39 |
| Tensile modulus | MPa | 10800 | 10450 | 10370 | 10400 |
| Tensile strength | MPa | 118 | 113 | 108 | 117 |
| Nominal strain at fracture | % | 2 | 2 | 2 | 2 |
| Fracture stress | MPa | 108 | 105 | 108 | 109 |
| Strain at fracture | % | 2 | 2 | 2 | 2 |
| Bending strength | MPa | 167 | 161 | 165 | 168 |
| Bending modulus | MPa | 9480 | 9720 | 9530 | 9930 |
| Maximum displacement | mm | 3.1 | 3.1 | 3.1 | 3.1 |
| Charpy impact strength | $kJ/m^2$ | 10 | 9 | 9 | 9 |
| Amount of generated ps oligomer gas | ppm | 1150 | 1040 | 1110 | 1270 |
| Amount of generated styrene gas | ppm | 30 | 20 | 30 | 40 |
| Amount of generated other gases | ppm | 630 | 610 | 660 | 760 |
| Amount of generated gas | ppm | 1810 | 1670 | 1800 | 2070 |
| Weld strength (strength at maximum point) | MPa | 21 | 23 | 20 | 22 |
| Load deflection temperature @1.80 MPa | °C | 160 | 159 | 155 | 160 |

[Table 4-2]

|  |  | Example 5 | Comparative Example 1 | Comparative Example 2 | Comparative Example 3 |
|---|---|---|---|---|---|
| PBT |  | 22.9 | 22.9 | 22.9 | 22.9 |
| PC |  |  | 7.6 | 7.6 | 7.6 |
| PCR-PC |  | 7.6 |  |  |  |
| Virgin PS |  |  | 37.3 |  |  |
| PCR-PS-1 |  |  |  |  | 37.3 |
| PCR-PS-2 |  |  |  |  |  |

(continued)

| | | Example 5 | Comparative Example 1 | Comparative Example 2 | Comparative Example 3 |
|---|---|---|---|---|---|
| PCR-PS-3 | % by mass | 37.3 | | | |
| PCR-PS-4 | | | | | |
| PCR-PS-5 | | | | | |
| PCR-PS-6 | | | | 37.3 | |
| Stabilizer 1 | | 0.1 | 0.1 | 0.1 | 0.1 |
| Stabilizer 2 | | 0.3 | 0.3 | 0.3 | 0.3 |
| Mold release agent 1 | | 0.25 | 0.25 | 0.25 | 0.25 |
| Mold release agent 2 | | 0.25 | 0.25 | 0.25 | 0.25 |
| CB-MB | | 1.3 | 1.3 | 1.3 | 1.3 |
| Reinforcing material | | 30 | 30 | 30 | 30 |
| Printability ΔE | | 11.2 | 4.4 | 5.2 | 15.1 |
| Amount of warpage | mm | 0.53 | 0.53 | 0.36 | 1.71 |
| Tensile modulus | MPa | 10090 | 9550 | 10480 | 8780 |
| Tensile strength | MPa | 119 | 118 | 106 | 100 |
| Nominal strain at fracture | % | 2 | 2 | 2 | 2 |
| Fracture stress | MPa | 112 | 118 | 105 | 93 |
| Strain at fracture | % | 2 | 2 | 2 | 2 |
| Bending strength | MPa | 170 | 178 | 148 | 150 |
| Bending modulus | MPa | 9700 | 10110 | 9660 | 9090 |
| Maximum displacement | mm | 3.2 | 3.2 | 2.7 | 3.1 |
| Charpy impact strength | kJ/m$^2$ | 10 | 9 | 9 | 8 |
| Amount of generated ps oligomer gas | ppm | 1020 | 720 | 190 | 860 |
| Amount of generated styrene gas | ppm | 20 | 30 | 40 | 20 |
| Amount of generated other gases | ppm | 710 | 670 | 1510 | 1770 |
| Amount of generated gas | ppm | 1750 | 1420 | 1740 | 2650 |
| Weld strength (strength at maximum point) | MPa | 21 | 16 | 14 | 20 |
| Load deflection temperature @1.80 MPa | °C | 156 | 163 | 134 | 159 |

In the above tables, ps oligomer means styrene oligomer.

As is clear from the above results, the resin composition of the present invention had excellent weld strength (Examples 1 to 5). In contrast, when the molecular weight distribution was low (Comparative Example 1), the weld strength was low. In addition, the resin composition of the present invention had excellent laser marking properties. When the weight average molecular weight of the polystyrene-based resin itself was small (Comparative Example 2), the weld strength was low.

Further, it was found that when the concentration of metal elements (especially the concentration of elemental iron) in the polystyrene-based resin was high, the laser marking properties were excellent (Example 2). However, when the amount of elemental iron was larger, or even when the total amount of iron and zinc was larger, gases other than styrene oligomers and styrene increased.

In addition, when the polystyrene-based resin contained a rubber-reinforced polystyrene resin (HIPS), the laser marking properties were particularly excellent. Further, even when recycled polycarbonate was used (Example 5), excellent performance could be maintained.

Moreover, when the amount of elemental iron was large, the amount of gas generated was large (Comparative Example 3).

**Claims**

1. A resin composition comprising:

   a polybutylene terephthalate resin; and
   a polystyrene-based resin having a weight average molecular weight (Mw) of $2.00 \times 10^5$ or more and a molecular weight distribution (Mw/Mn) of 3.20 or more, wherein
   the polystyrene-based resin contains elemental iron in a proportion of from 0.1 to 160.0 ppm by mass with respect to 100 parts by mass of the polystyrene-based resin.

2. The resin composition according to claim 1, wherein a total amount of elemental iron and elemental zinc contained in the polystyrene-based resin is from 1 to 280 ppm by mass with respect to 100 parts by mass of the polystyrene-based resin.

3. The resin composition according to claim 1 or 2, wherein the polystyrene-based resin contains elemental zinc in a proportion of from 0.1 to 1000.0 ppm by mass with respect to 100 parts by mass of the polystyrene-based resin.

4. The resin composition according to claim 1 or 2, wherein the polystyrene-based resin contains ash in a proportion of from 0.001 to 10% by mass.

5. The resin composition according to claim 1 or 2, wherein the polystyrene-based resin contains elemental calcium in a proportion of from 0.1 to 1000.0 ppm by mass with respect to 100 parts by mass of the polystyrene-based resin.

6. The resin composition according to claim 1 or 2, wherein the polystyrene-based resin contains a polystyrene resin and/or a rubber-reinforced polystyrene resin.

7. The resin composition according to claim 1 or 2, wherein

   the polybutylene terephthalate resin has an intrinsic viscosity (IV) of from 0.30 to 0.80 dL/g, and
   the polystyrene-based resin has a melt viscosity ($\eta$) at 250°C and a shear rate of 912 sec$^{-1}$ of 80 Pa·sec or more.

8. The resin composition according to claim 1 or 2, wherein the polystyrene-based resin contains a recycled product.

9. The resin composition according to claim 1 or 2, wherein the polystyrene-based resin contains a polystyrene resin other than syndiotactic polystyrene and/or a rubber-reinforced polystyrene resin.

10. The resin composition according to claim 1 or 2, wherein the polystyrene-based resin has a content of from 10 to 250 parts by mass with respect to 100 parts by mass of the polybutylene terephthalate resin.

11. The resin composition according to claim 1, wherein

    a total amount of elemental iron and elemental zinc contained in the polystyrene-based resin is from 1 to 280 ppm by mass with respect to 100 parts by mass of the polystyrene-based resin,
    the polystyrene-based resin contains elemental zinc in a proportion of from 0.1 to 1000.0 ppm by mass with respect to 100 parts by mass of the polystyrene-based resin,
    the polystyrene-based resin contains ash in a proportion of from 0.001 to 10% by mass,
    the polystyrene-based resin contains elemental calcium in a proportion of from 0.1 to 1000.0 ppm by mass with respect to 100 parts by mass of the polystyrene-based resin,
    the polybutylene terephthalate resin has an intrinsic viscosity (IV) of from 0.30 to 0.80 dL/g,
    the polystyrene-based resin has a melt viscosity ($\eta$) at 250°C and a shear rate of 912 sec$^{-1}$ of 80 Pa·sec or more,

the polystyrene-based resin contains a recycled product,
the polystyrene-based resin contains a polystyrene resin other than syndiotactic polystyrene and/or a rubber-reinforced polystyrene resin, and
the polystyrene-based resin has a content of from 10 to 250 parts by mass with respect to 100 parts by mass of the polybutylene terephthalate resin.

12. The resin composition according to claim 1, 2 or 11, which is used for laser marking.

13. A pellet of the resin composition of claim 1, 2 or 11.

14. A molded body formed from the resin composition of claim 1, 2 or 11.

15. A molded body formed from the pellet of claim 13.

16. The molded body according to claim 14, which is for laser marking.

## INTERNATIONAL SEARCH REPORT

| | International application No. |
|---|---|
| | **PCT/JP2023/003392** |

**A. CLASSIFICATION OF SUBJECT MATTER**

*C08L 25/04*(2006.01)i; *C08L 67/02*(2006.01)i
FI: C08L25/04; C08L67/02

According to International Patent Classification (IPC) or to both national classification and IPC

**B. FIELDS SEARCHED**

Minimum documentation searched (classification system followed by classification symbols)

C08L25/04; C08L67/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-149768 A (MITSUBISHI ELECTRIC CORP) 09 July 2009 (2009-07-09) claims, paragraphs [0010], [0018]-[0019], [0026], [0032], [0040], examples | 1-9, 12-16 |
| A | | 10-11 |
| Y | JP 2001-72873 A (KURARAY CO LTD) 21 March 2001 (2001-03-21) claims, paragraphs [0023], [0078]-[0080] | 1-9, 12-16 |
| A | | 10-11 |
| A | JP 2015-892 A (RICOH CO LTD) 05 January 2015 (2015-01-05) | 1-16 |
| A | JP 2018-184589 A (ASAHI KASEI CORP) 22 November 2018 (2018-11-22) | 1-16 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/003392**

| Patent document cited in search report | | | Publication date (day/month/year) | Patent family member(s) | | | Publication date (day/month/year) |
|---|---|---|---|---|---|---|---|
| JP | 2009-149768 | A | 09 July 2009 | (Family: none) | | | |
| JP | 2001-72873 | A | 21 March 2001 | US | 6759107 | B1 | |
| | | | | claims, column 3, lines 53-65, column 12, line 49 to column 13, line 8 | | | |
| | | | | EP | 1067154 | A2 | |
| | | | | CA | 2313399 | A | |
| | | | | AU | 4510000 | A | |
| | | | | KR | 10-2001-0015230 | A | |
| | | | | CN | 1280148 | A | |
| | | | | CA | 2313399 | A1 | |
| JP | 2015-892 | A | 05 January 2015 | US | 2014/0371359 | A1 | |
| | | | | CN | 104231511 | A | |
| JP | 2018-184589 | A | 22 November 2018 | TW | 201841720 | A | |

Form PCT/ISA/210 (patent family annex) (January 2015)

**EP 4 474 423 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021161335 A
- WO 2018143100 A
- JP 2017052925 A
- JP 2017052262 A
- JP 2021063196 A
- JP 2018070722 A
- JP 2019056035 A
- WO 2017038949 A
- JP 2019123809 A
- JP 2021101020 A
- JP 2019188393 A
- JP 6183822 B